# FASCICULE DE BREVET EUROPEEN

(11) **EP 1 192 383 B1**
(45) Date de publication et mention de la délivrance du brevet: **07.01.2004**
(21) Numéro de dépôt: 00949530.0
(22) Date de dépôt: 13.06.2000
(51) Int. Cl.: F16L 37/30, F16L 37/38, F16L 37/56

(54) **EMBOUT FEMELLE ET RACCORD DE CONDUIT COMPORTANT LEDIT EMBOUT FEMELLE**
ROHRMUFFE UND ROHRVERBINDUNG DAMIT
FAUCET AND PIPE CONNECTION COMPRISING SAME

(30) Priorité: 14.06.1999 FR 9907504
(43) Date de publication de la demande: 03.04.2002
(73) Titulaire: Fremy, Raoul, 91080 Courcouronnes (FR)
(72) Inventeur: Fremy, Raoul, 91080 Courcouronnes (FR)
(74) Mandataire: Laget, Jean-Loup
(86) Numéro de dépôt international: PCT/FR2000/001627
(87) Numéro de publication internationale: WO 2000/077438

(56) Documents cités:
- EP-A- 0 202 798
- EP-A- 0 441 727
- US-A- 3 078 068
- US-A- 4 473 211

## Description

La présente invention concerne un embout femelle et un raccord de conduit dans lequel un embout mâle est engagé dans ledit embout femelle, l'engagement assurant l'ouverture d'un clapet prévu sur au moins l'un de ces éléments, le clapet étant du type à boulet tournant.

Un clapet de ce type présente un élément d'obturation de forme généralement sphérique, usiné en fer à cheval et comportant des fraisages ou des perçages afin de positionner un élément d'articulation. Cet élément obturateur sphérique est monté dans un élément de raccord ou embout mâle ou femelle avec son centre coïncidant avec l'axe du canal de passage de fluide à contrôler, cet élément obturateur sphérique qui prend appui sur un siège au débouché du canal dans la chambre de clapet comportant un alésage diamétral, lequel peut par des moyens adéquats être amené en coïncidence avec le canal du fluide pour assurer l'ouverture du clapet ou être orienté sensiblement à 90° pour assurer la fermeture du clapet.

Un élément obturateur sphérique de ce type comporte un organe de rotation tel que deux billes ou une broche traversante qui est agencé pour coopérer avec un mandrin présentant la forme d'un arbre creux et qui conduit la veine fluidique, le mandrin étant prolongé à une extrémité par un organe tel qu'un bras ou une bielle qui s'articule sur l'organe de rotation. Un embout comporte également une bague cylindrique définissant à son extrémité extérieure un siège d'appui et d'étanchéité dans le corps cylindrique et contre lequel vient en appui l'élément obturateur sphérique et entraînable en translation dans l'embout selon des courses déterminant les conditions d'ouverture et de fermeture de l'élément obturateur, l'ensemble de ces éléments étant enfermé dans un corps cylindrique concentrique.

Un tel raccord est connu par FR-B-2 521 685 dans lequel le clapet comporte un mandrin axial fixe placé au fond du corps de l'embout, dirigé vers la sortie du raccord et alésé au diamètre du passage du raccord, ce mandrin comportant à son extrémité intérieure correspondant au fond du corps une portée pour un ressort de rappel et à son extrémité extérieure, du côté de la zone de raccord, un flasque radial dont les deux faces latérales tangentent la surface extérieure du mandrin, un chambrage débouchant dans le secteur en zone sphérique opposé au secteur actif étant réalisé dans l'élément obturateur sphérique, ce chambrage comportant des surfaces coopérant en contact glissant avec les faces latérales du flasque du mandrin et l'axe d'entraînement en rotation de l'élément obturateur étant porté par le flasque du mandrin et perpendiculairement auxdites faces.

Ce type de raccord de conduit est utilisé dans le domaine de l'hydraulique, de l'armement et dans le domaine spatial. En particulier, il est utilisé en tant que raccord de conduit pour le ravitaillement de véhicules. Dans le cas de véhicules de courses ou de véhicules militaires, il convient que le ravitaillement se fasse le plus rapidement possible et de manière sûre garantissant ainsi une parfaite sécurité au niveau du raccord.

En effet, dans le cas d'une utilisation en compétition automobile par exemple, la mise en place du raccord pour un ravitaillement en essence doit être effectuée le plus rapidement possible et en toute sécurité de manière à éviter la tombée d'essence sur les freins de la voiture qui provoquerait un embrasement du véhicule.

Les raccords actuels doivent être positionnés de manière correcte c'est-à-dire que l'embout mâle, ou embout ravitailleur, doit être présenté devant l'embout femelle, généralement embarqué sur le véhicule dans le réservoir de celui-ci, parfaitement dans l'axe pour autoriser une mise en place sûre. Ceci n'est pas toujours facile à réaliser d'une part du fait du poids du matériel utilisé, en particulier, lorsqu'on utilise un ravitaillement en essence par gravité, et d'autre part du fait des conditions de mise en oeuvre qui peuvent être difficiles comme le ravitaillement en course automobile, un ravitaillement en carburant d'avion en plein ciel, etc.

On connaît, par EP-A-0 202 798, un raccord dont l'embout femelle présente les caractéristiques du préambule de la revendication 1. Cependant, la disposition à rotation coaxiale du mandrin et de la bague cylindrique ne permet pas une mise en place rapide et sûre du raccord, en particulier dans les conditions sévères du ravitaillement en compétition automobile ou du ravitaillement d'avions en vol.

La présente invention a pour but de pallier cet inconvénient en proposant un nouveau type d'embout femelle et un raccord de conduit du type comportant un embout mâle engagé dans ledit embout femelle, l'engagement assurant l'ouverture d'un clapet prévu sur au moins l'un de ces embouts étant autorisé même si les éléments constitutifs de l'un et de l'autre ne sont pas parfaitement alignés.

Ce but est atteint, conformément à l'invention, par les caractéristiques de la revendication 1.

De cette manière, les portées sphériques du mandrin et de l'extrémité extérieure de la bague autorisent par glissement contre les portées complémentaires du corps cylindrique une oscillation dudit mandrin et de la bague par rapport à l'axe principal de l'embout femelle pour permettre un alignement de ces pièces avec celles d'un embout mâle qui ne se présente pas dans le même axe.

De manière à favoriser le glissement du mandrin par rapport au corps cylindrique pour une oscillation, l'extrémité intérieure du corps et l'extrémité intérieure du mandrin sont traitées pour améliorer le glissement entre lesdites extrémités, à l'aide d'un traitement tel qu'une application d'un revêtement mince à base de fluor.

De manière avantageuse, au moins l'une des portées de l'extrémité intérieure du corps cylindrique ou de l'extrémité intérieure du mandrin comporte au moins une portée de billes. On favorise ainsi le glissement desdites portées.

En variante, la portée de l'extrémité intérieure du corps cylindrique comporte des puits répartis régulièrement angulairement sur ladite portée en calotte sphérique et comportant chacun une bille, un puits présentant une surface centrale bombée et une surface conique en périphérie. On assure ainsi un recentrage automatique lors d'une oscillation.

La bague cylindrique de chaque embout définit à son extrémité extérieure, du côté de la zone de raccord, un siège d'étanchéité et d'appui pour l'élément obturateur sphérique encore appelé entretoise de capture de joint qui sert à la création d'une gorge trapézoïdale pour recevoir un joint. Ce siège d'étanchéité et d'appui présente dans l'embout femelle, la portée périphérique en calotte sphérique

Le moyen de rappel élastique permettant le coulissement en translation de la bague cylindrique dans le corps cylindrique de l'embout femelle est, de préférence, un ressort monté entre la bague cylindrique et le mandrin. De préférence, ce moyen de rappel élastique est mis en place entre l'extrémité extérieure de la bague cylindrique qu'il maintient en appui étanche sur le corps cylindrique et l'extrémité intérieure du mandrin qu'il maintient en appui sur le corps cylindrique. La bague et le mandrin sont ainsi liés et peuvent osciller ensemble dans le corps cylindrique.

Le mandrin de l'embout femelle est de préférence court, ce qui permet un gain dans les dimensions et le poids dudit embout femelle. Ceci est particulièrement avantageux, lorsque l'embout femelle est embarqué sur une voiture de course par exemple.

Selon une forme de réalisation préférée de l'invention, l'élément obturateur sphérique de l'embout est usiné en fer à cheval et comporte en outre deux plats diamétralement opposés pourvus respectivement d'un axe et une fourrure cylindrique présentant des secteurs usinés en forme de fourches est logée concentrique à l'intérieur de la bague cylindrique, les axes de l'élément obturateur sphérique étant logés dans lesdites fourches, les doigts des fourches s'encastrant dans des encoches aménagées dans l'épaisseur du siège d'étanchéité et d'appui sous l'effet d'un moyen de rappel élastique tel qu'une rondelle Belleville ou similaire mis en place entre ladite fourrure cylindrique et l'extrémité intérieure de la bague cylindrique.

Dans cette forme de réalisation, le centre de l'élément sphérique est strictement invariant quel que soit l'axe considéré, son centrage au coeur de la veine fluidique l'écarte de tout risque de frottement parasite. On favorise donc la tenue de l'ensemble lors d'une oscillation.

De manière à favoriser encore plus l'engagement d'un embout mâle et de l'embout femelle qui peut être rendu difficile du fait du poids et de la rigidité de la tuyauterie auquel l'embout mâle est raccordé, on peut mettre en place entre la structure réceptrice de l'embout femelle et le corps cylindrique dudit embout femelle, un soufflet qui permet d'épouser des positions angulaires très importantes.

La présente invention a également pour objet un raccord de conduit du type comportant un embout femelle selon l'invention et un embout mâle comportant un corps cylindrique à l'intérieur duquel est logé concentrique un mandrin définissant le canal fluidique et portant à son extrémité extérieure, articulé en rotation, un élément obturateur sphérique présentant un alésage diamétral, une bague cylindrique, entourant ledit mandrin et l'élément obturateur sphérique, étant logée entraînable en translation dans le corps cylindrique contre l'effet d'un moyen de rappel élastique, les courses en translation de la bague dans le corps provoquant, lors de l'engagement de l'embout mâle sur l'embout femelle, l'entraînement en rotation de l'élément obturateur sphérique entre sa position d'ouverture où son alésage est amené en coïncidence avec le canal fluidique et sa position de fermeture, caractérisé en ce que le mandrin de l'embout mâle muni à son extrémité extérieure de l'élément obturateur sphérique et entouré par la bague cylindrique est monté en saillie du corps cylindrique et l'embout mâle comporte en outre une fourrure engagée, entre la bague cylindrique et le corps cylindrique, coulissante en translation dans ledit corps cylindrique, un moyen de rappel élastique étant interposé entre le corps cylindrique et la face avant de ladite fourrure qui assure l'engagement sur l'embout femelle.

Ainsi, la bague et la fourrure constituent une partie en forme de piston d'engagement sur l'embout femelle.

De préférence, l'élément obturateur sphérique de l'embout mâle est usiné en fer à cheval et comporte en outre deux plats diamétralement opposés pourvus respectivement d'un axe.

Dans l'embout mâle, le mandrin présente à son extrémité une fourrure cylindrique présentant des secteurs usinés en forme de fourches dans lesquelles sont logés les axes dudit élément obturateur sphérique de manière à strictement contrôler le centrage dudit élément obturateur sphérique, un moyen de rappel élastique étant interposé entre la fourrure cylindrique et le mandrin.

Lors de l'engagement de l'embout mâle sur l'embout femelle, une mise en étanchéité est assurée par la mise en place de la fourrure sur la façade de l'embout femelle. De préférence, la face avant d'engagement de la fourrure est réalisée sous forme d'un cône du type trompette ce qui favorise un engagement en aveugle pour le rapprochement des façades des embouts mâle et femelle constituant l'interface entre embouts.

Selon une forme de réalisation préférée, le raccord selon l'invention comporte un second circuit de circulation sensiblement concentrique au canal fluidique, par exemple pour la reprise des gaz.

Ainsi, la bague cylindrique de l'embout mâle présente au moins deux lobes périphériques qui définissent des passages entre ladite bague et la fourrure, lesdits passages communiquant avec un conduit d'évacuation débouchant dans le corps cylindrique de l'embout mâle tandis que le corps cylindrique de l'embout femelle comporte des lumières qui, lors de la connexion entre l'embout mâle et l'embout femelle, sont mises en communication avec les passages de l'embout mâle.

Lors de la mise en place du raccord selon l'invention, un circuit distinct du canal fluidique s'établit donc entre un réservoir ou conduit dans lequel est monté l'embout femelle et un conduit d'évacuation débouchant dans l'embout mâle et dans lequel s'établit une circulation au travers des lumières du corps cylindrique de l'embout femelle et des passages définis par les lobes de la bague cylindrique de l'embout mâle vers le conduit.

Ainsi, un raccord selon cette forme de réalisation de l'invention, forme, lors de l'engagement de l'embout mâle sur l'embout femelle, un passage fermé pouvant servir à la reprise des gaz et peut être avantageusement utilisé dans le cas d'un ravitaillement en fluides évaporables tels les gaz comprimés dont le gaz naturel liquéfié (cryogénique), les carburants et d'une manière générale tous les liquides qui, stockés, se présentent à la fois sous forme d'une phase liquide et d'une phase vapeur.

Lorsque l'interface a été réalisée par engagement de la face avant d'engagement de la fourrure de l'embout mâle sur la façade avant de l'embout femelle, le siège d'appui et d'étanchéité de l'embout mâle vient en appui contre le siège d'appui et d'étanchéité de l'embout femelle et repousse celui-ci à l'intérieur du corps cylindrique de l'embout femelle. L'étanchéité à l'intérieur de l'embout femelle est rompue et un passage est ouvert pour les gaz depuis le réservoir ou conduit au travers des lumières de l'embout femelle. On commence donc le dégazage du réservoir, les gaz passant ensuite dans les passages définis par les lobes de la bague cylindrique de l'embout mâle vers le conduit débouchant dans l'embout mâle de telle sorte qu'il peut y avoir une reprise des gaz.

Le recul de la bague cylindrique de l'embout femelle permet également progressivement l'ouverture de son élément obturateur sphérique. Une fois parvenue à la pleine ouverture du réservoir, la bague est en appui contre l'extrémité arrière de l'embout femelle, et mise en butée sous l'effet de la poussée de l'opérateur, engendre alors le recul de la bague cylindrique de l'embout mâle dans le corps cylindrique dudit embout mâle ce qui engendre l'ouverture de l'élément obturateur sphérique de l'embout mâle.

Pour éviter que de faibles quantités de carburant ne viennent contrarier le reflux gazeux, des joints toriques (étanchéité statique) sont disposés d'une part sur l'épaulement conique de l'interface et d'autre part dans l'embase arrière du raccord embarqué.

De préférence, la fourrure de l'embout mâle comporte des lumières permettant la lisibilité, de préférence sur 360°, du remplissage par l'opérateur, en constatant la remontée de bulles précédant de peu le niveau maximal du réservoir, et un éventuel reflux consécutif à un trop-plein.

Ce dispositif, construit de telle sorte que les fourrures et bagues présentent des diamètres étagés, permet la réalisation d'un ensemble mécanique où les risques de coincement sont écartés.

De manière avantageuse, les courses en translation de la bague et de la fourrure de l'embout mâle, de la bague de l'embout femelle par rapport à leur corps cylindrique respectif et la force des moyens de rappel élastique déterminent la cinématique d'ouverture et de fermeture des éléments obturateurs sphériques ainsi que celle du second circuit pour la reprise des gaz par exemple.

Ainsi, dans le cadre du transfert de fluides évaporables, soit qu'il s'agisse du respect de l'environnement, de la sécurité des hommes et des matériels, soit qu'il s'agisse d'aller très vite ou qu'il convienne d'éviter pour des appareils militaires (blindés, hélicoptères) la signature radar d'un ravitaillement de nuit ou par temps de brouillard, le raccord selon l'invention permet une reprise des gaz sans nécessiter une implantation en boucle devant être ménagée en sus du raccord comme cela était le cas auparavant.

Pour ces applications, le raccord selon l'invention permet toute manoeuvre de transvasement en impliquant la reprise des gaz, ce dégazage s'opérant avant même que le remplissage ne soit amorcé et ne s'achevant qu'après réalisation du plein.

Dans le cas de la compétition automobile, le raccord selon l'invention permet des ravitaillements par gravité tout en assurant un remplissage effectué en un temps record et dégazage approprié, tout en protégeant les opérateurs, les véhicules comme les pilotes ce qui permet de gérer au mieux les nombreuses contraintes de ravitaillements successifs lors d'épreuves d'endurance du type 24 Heures du Mans, par exemple.

Le raccord selon l'invention présente donc une vélocité du passage direct, une réduction drastique du poids et de l'encombrement de la partie embarquée (embout femelle), un fonctionnement suivant le principe de la gravité, l'aptitude à être utilisé en d'autres circonstances sous pression en ne nécessitant que de légères modifications, une rigoureuse automaticité (le raccord obéit à une séquence invariable), des performances maximales, et qui assure simultanément les fonctions : de transfert du carburant en régime laminaire, suivant un ⌀ 33 m/m, ( 855m/m2) par exemple, de dégazage du réservoir en condition statique par un passage quasi rectiligne qui offre une section de passage d'environ 1700m/m2, par exemple, la récupération des gaz en condition statique nécessitant une section de 1,5 fois celle de l'alimentation.

Répondant au principe de l'homme mort et au précepte de la gravité, le raccord selon l'invention satisfait à toutes les exigences, qu'elles se déclinent en terme d'efficacité, de fiabilité, de sécurité ou en terme d'ergonomie.

Suivant une séquence préétablie, automatique et invariable le raccord selon l'invention garantit un centrage et un engagement en aveugle, par guidage périphérique du cône trompette ménagé sur l'embout mâle, un emboîtement (et déboîtement) sans risque de coincement, l'alignement mécanique des composants du fait de l'oscillation du mandrin et de la bague cylindrique dans l'embout femelle, l'ouverture automatique des orifices de dégazage puis, consécutivement, l'ouverture de l'obturateur du réservoir, enfin, l'ouverture de l'obturateur de l'embout mâle ravitailleur, et inversement, le remplissage ayant été accompli et suivant ladite séquence, la lisibilité, sur 360°, d'un éventuel reflux consécutif à un « trop plein », et par désengagement, la fermeture de l'obturateur de l'embout ravitailleur (alimentation), l'écoulement résiduel de l'interface dans le réservoir (voiture), la fermeture de l'obturateur de l'embout femelle du réservoir puis l'arrêt du dégazage, enfin la séparation des deux embouts, même suite à un démarrage précipité.

A noter qu'après un trop plein, le raccord selon l'invention permet une purge manuelle du circuit de dégazage.

On décrira maintenant plus en détail un raccord selon un exemple de réalisation de l'invention en référence au dessin dans lequel :
les figures 1a et 1b représentent respectivement une vue en coupe longitudinale d'un embout femelle d'un raccord selon l'invention, en position fermée et en position ouverte,
la figure 2 représente une vue en coupe longitudinale d'un embout femelle selon la figure 1a après une rotation à 90° ;

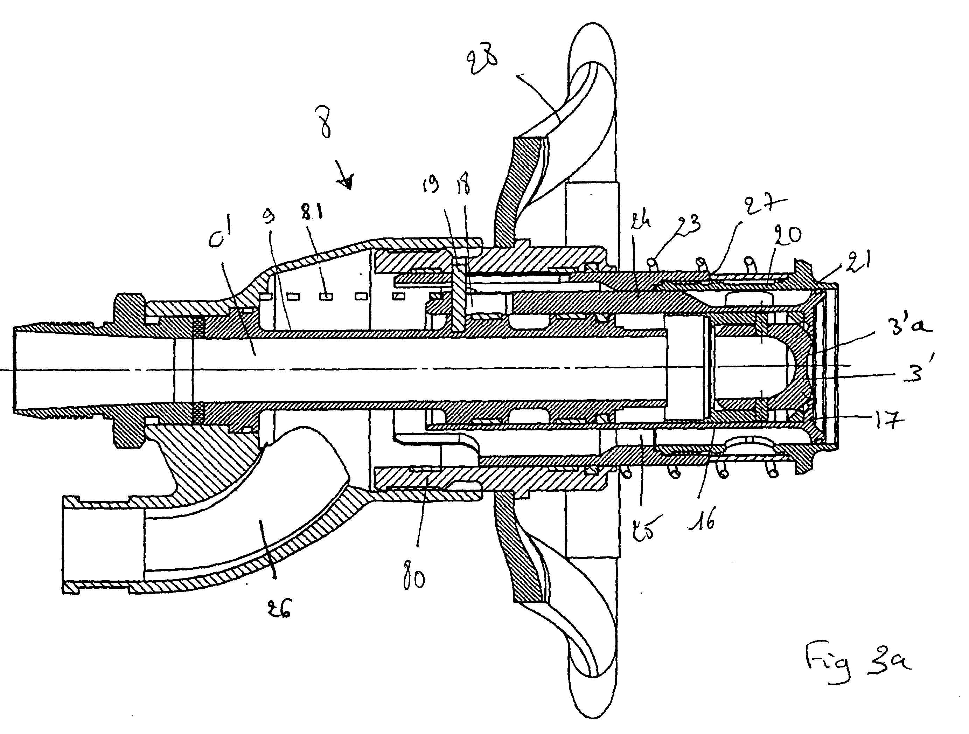

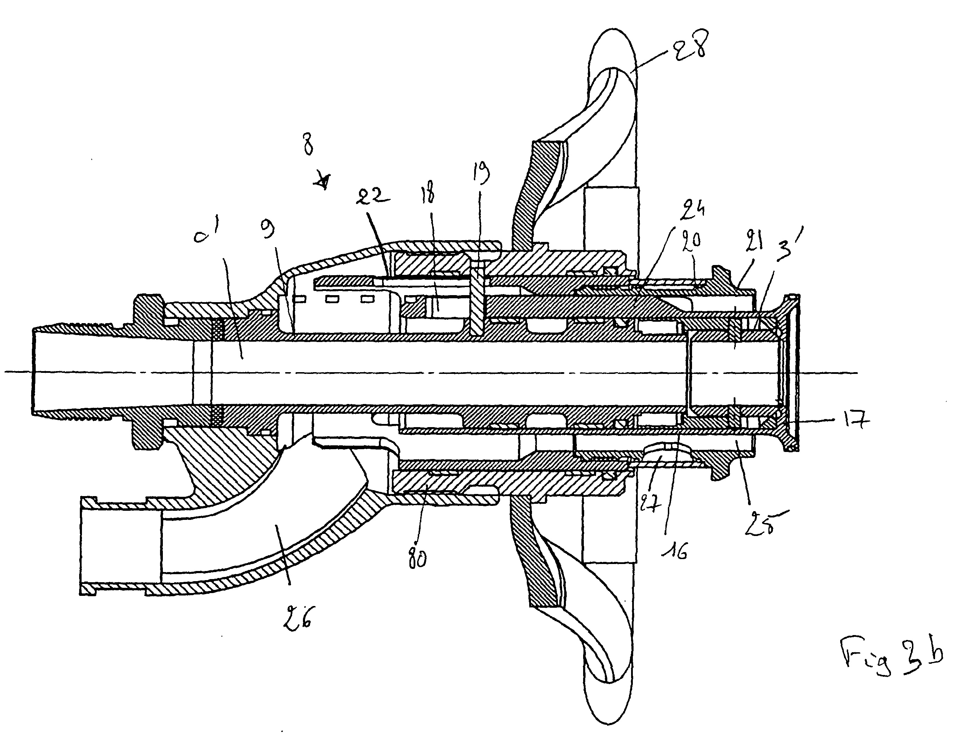

les figures 3a et 3b représentent respectivement une vue en coupe longitudinale d'un embout mâle d'un raccord selon l'invention, en position fermée et en position ouverte ;

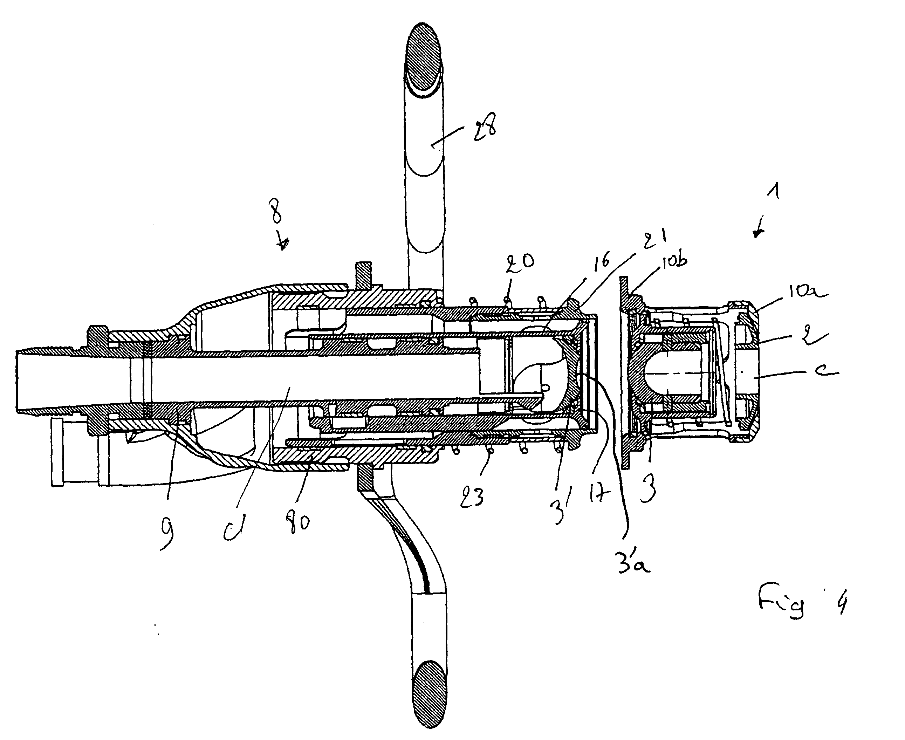

la figure 4 représente une vue en coupe longitudinale du raccord selon l'invention, en position avant connexion des deux embouts ;
la figure 5 représente une vue selon la figure 4 en position partiellement ouverte du raccord ;
les figures 6a et 6b représentent respectivement une vue en perspective latérale et une vue en coupe longitudinale du mandrin et de l'élément obturateur sphérique de l'embout mâle.

Un raccord de conduit selon l'invention comporte un embout femelle 1 et un embout mâle 8.

L'embout femelle 1 comporte un corps cylindrique 10 pour son montage sur le réservoir d'un véhicule par exemple.

Dans ce corps cylindrique 10 est monté un mandrin 2 définissant le canal fluidique C à l'extrémité extérieure duquel est monté un élément obturateur sphérique 3, une bague 4 étant engagée coulissante dans le corps cylindrique 10 et entourant le mandrin 2 et l'élément obturateur 3.

L'extrémité intérieure du mandrin 2, du côté du réservoir d'un véhicule, opposée à son extrémité extérieure en liaison avec l'élément obturateur 3 présente une portée 2a en calotte sphérique complémentaire d'une portée 10a ménagée à l'extrémité intérieure du corps cylindrique 10 opposée à sa façade 10b de raccord.

L'extrémité de la bague 4 du côté extérieur de l'embout femelle 1 définit un siège d'étanchéité et d'appui 5 contre lequel est en appui l'élément obturateur sphérique 3 et est pourvu d'une portée périphérique 6 en calotte sphérique en appui étanche contre une portée complémentaire 10c du corps cylindrique 10, un moyen de rappel élastique tel qu'un ressort 7 étant interposé entre la portée 2a du mandrin 2 et la portée périphérique 6 de la bague 4.

Sous l'effet du moyen de rappel élastique 7, la portée périphérique 6 de la bague 4 est maintenue en appui étanche contre la portée périphérique 10c complémentaire du corps cylindrique 10, l'élément obturateur 3 étant en position fermée.

De préférence, l'élément obturateur sphérique 3 est tenu à distance du siège d'appui et d'étanchéité 5 par un joint, le siège 5 encore appelé entretoise de capture de joint définissant une gorge trapézoïdale G pour le joint. On évite ainsi les risques d'abrasion et/ou de gommage de la sphère de l'élément obturateur sphérique 3 lorsque, par exemple, celui-ci est utilisé pour des fluides à fort taux de vaporisation tels que les carburants qui présentent un faible pouvoir mouillant. On évite ainsi les risques de fermeture incomplète ou de blocage.

De préférence, le joint est enrobé d'une matière douce telle que celle connue sous la dénomination commerciale « Téflon ». Ce joint peut être un joint torique de forte section à haute dureté « shore » du type FEP ou un joint en U en Téflon maintenu en forme par un ressort de type « variseal » ou bien un joint torique de forte section coiffé d'un coussinet de type « double delta ou plus seal ».

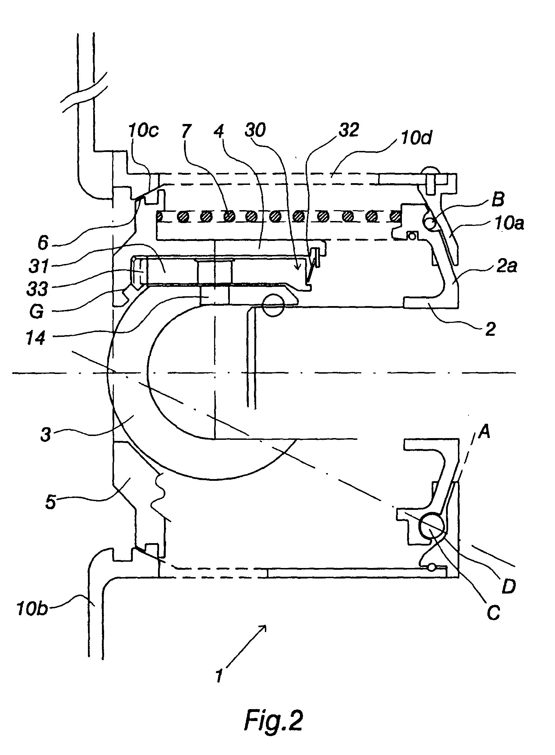

Comme cela est visible à la figure 2 dans la partie haute de la figure, au moins l'une des portées 10a de l'extrémité intérieure du corps cylindrique 10 ou 2a de l'extrémité intérieure du mandrin 2 comporte au moins une portée de billes B. On favorise ainsi le glissement desdites portées 10a et 2a l'une contre l'autre. En variante comme cela est représenté dans la partie basse de la figure 2, la portée 10a de l'extrémité intérieure du corps cylindrique 10 comporte des puits D répartis régulièrement angulairement sur ladite portée 10a en calotte sphérique et comportant chacun une bille C, un puits D présentant une surface centrale bombée et une surface conique en périphérie. Ainsi, par exemple, on met en place cinq billes C de fort diamètre dans cinq puits D équidistants de 72°, ces billes C étant appelées à se déplacer sur une surface du puits D bombée en région centrale et conique en périphérie. Le cône a valeur de rampe, par exemple 10° de pente par rapport au plan tangent A. On assure ainsi un recentrage automatique lors d'une oscillation.

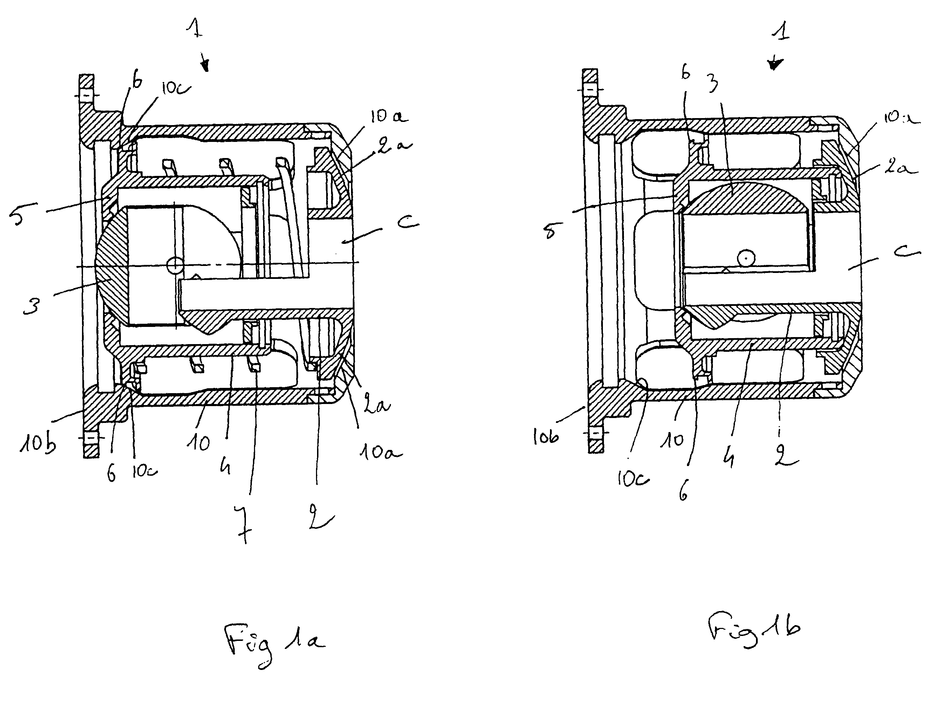

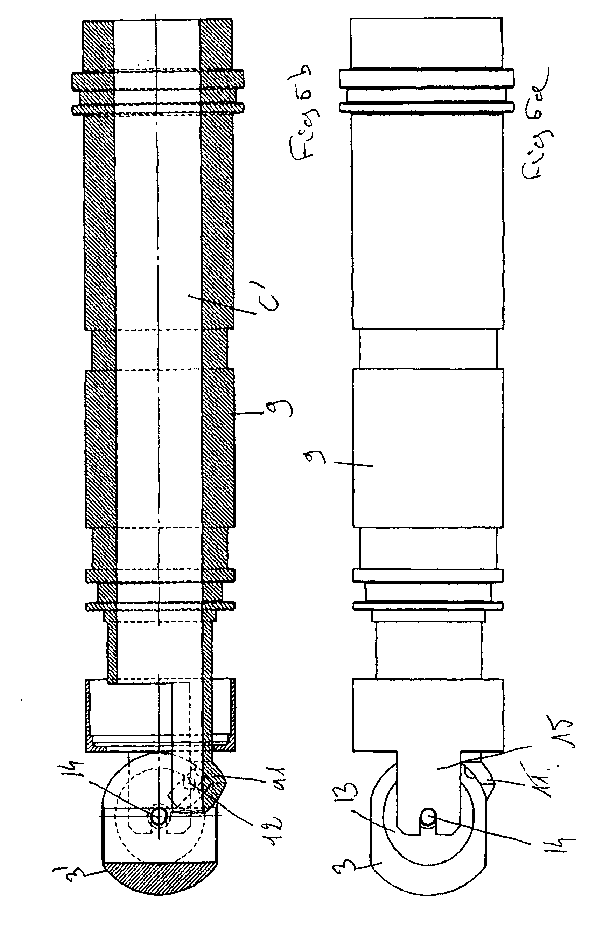

Lorsqu'on veut ouvrir l'embout femelle 1, on exerce une poussée sur le siège d'appui et d'étanchéité 5 contre l'effet du moyen de rappel élastique 7. Cette poussée repousse la bague 4 à l'intérieur du corps cylindrique 1 et l'élément obturateur 3 est alors entraîné par la bague 4 en rotation à l'extrémité du mandrin 2 jusqu'à sa position d'ouverture (figure 1b), l'articulation de l'élément obturateur sphérique 3 sur le mandrin 2 est la même que pour l'embout mâle 8 et sera expliquée par la suite en référence aux figures 6a et 6b.

Les portées 2a et 6 en calotte sphérique ménagées à l'extrémité intérieure du mandrin 2 et à l'extrémité extérieure de la bague 4 en appui l'une et l'autre sur des portées complémentaires 10a et 10c du corps cylindrique 10 autorisent une oscillation de l'ensemble bague 4, mandrin 2 et élément obturateur 3 dans le corps cylindrique 10 par glissement les unes contre les autres de telle sorte que, lorsqu'un embout mâle 8 est raccordé, cette oscillation autorise la mise en place du raccord même lorsque l'embout mâle 8 est engagé sur l'embout femelle 1 désaligné, puisqu'elle permet un alignement des composants de l'embout mâle 8 et de l'embout femelle 1, le mandrin 2 et la bague cylindrique 4 pivotant pour se trouver alignés avec l'embout mâle 8.

L'élément obturateur sphérique 3 est usiné en fer à cheval et comporte en outre deux plats 13 diamétralement opposés et pourvus respectivement d'un axe 14. Une fourrure cylindrique 30 présentant des secteurs usinés en forme de fourches 31 dans lesquelles sont logés les axes 14 dudit élément obturateur sphérique 3 est logée concentrique à l'intérieur de la bague cylindrique 4. Les doigts des fourches 31 s'encastrent dans des encoches 33 aménagées dans l'épaisseur du siège d'étanchéité et d'appui 5 sous l'effet d'un moyen de rappel élastique tel qu'une rondelle Belleville 32 ou similaire mis en place entre ladite fourrure cylindrique 30 et l'extrémité intérieure de la bague cylindrique 4.

On contrôle strictement le centrage dudit élément obturateur sphérique 3 et on assure une parfaite tenue de l'ensemble mandrin 2, bague 4 et élément obturateur sphérique 3 lors d'une oscillation..

L'embout mâle 8 comporte un corps cylindrique 80 dans lequel est monté fixe un mandrin 9 définissant le canal fluidique C' fermé par un élément obturateur sphérique 3', similaire à celui de l'embout femelle 1, monté à l'extrémité extérieure du mandrin 9.

Ce mandrin 9 comporte à son extrémité extérieure un flasque radial 11 (voir la figure 6b) dont les deux faces latérales tangentent la surface extérieure du mandrin 9, un chambrage débouchant dans le secteur en zone sphérique opposé au secteur actif étant réalisé dans l'élément obturateur sphérique 3', ce chambrage comportant des surfaces coopérant en contact glissant avec les faces latérales du flasque 11 du mandrin 9 et l'axe 12 d'entraînement en rotation de l'élément obturateur 3' étant porté par le flasque 11 du mandrin 9 et perpendiculairement auxdites faces. Le mandrin 2 présente une structure similaire.

L'élément obturateur sphérique 3' de l'embout mâle est également usiné en fer à cheval et comporte en outre deux plats 13 diamétralement opposés et pourvus respectivement d'un axe 14. Le mandrin 9 présente à son extrémité une fourrure cylindrique présentant des secteurs usinés en forme de fourches 15 dans lesquelles sont logés les axes 14 dudit élément obturateur sphérique 3' de manière à strictement contrôler le centrage dudit élément obturateur sphérique 3', un moyen de rappel élastique 40 étant logé entre le mandrin 9 et la fourrure cylindrique.

La sphère de l'élément obturateur sphérique 3' de l'embout mâle 8 présente un évidemment 3'a pour autoriser la rotation de la sphère de l'élément obturateur 3 de l'embout femelle 1.

Une bague cylindrique 16 s'étend autour du mandrin 9 et de l'élément obturateur 3' et définit à son extrémité extérieure le siège d'étanchéité et d'appui 17 contre lequel est en appui l'élément obturateur sphérique 3'.

Cette bague 16 est montée coulissante en translation à l'intérieur du corps cylindrique 80 contre l'effet d'un moyen de rappel élastique tel qu'un ressort 81 interposé entre l'embase du corps cylindrique 80 à son extrémité intérieure, du côté du conduit de ravitaillement par exemple, et l'extrémité intérieure de ladite bague 16, la course de ladite bague 16 à l'intérieur du corps cylindrique 80 permettant l'ouverture et la fermeture de l'élément obturateur sphérique 3'.

Cette course est définie par au moins une lumière 18 ménagée radialement dans la bague 16 et dans laquelle est engagée une broche 19 fixe dans le corps cylindrique 80.

Une fourrure cylindrique 20 est interposée entre la bague 16 et le corps cylindrique 80. Cette fourrure 20 présente à son extrémité extérieure une partie avant d'engagement sur la façade 10b de l'embout femelle 1 ménagée sous forme d'un cône trompette 21. La fourrure 20 est en saillie par rapport au siège d'étanchéité et d'appui 17. Cette fourrure 20 présente au moins une lumière radiale 22 dans laquelle est également engagée la broche 19 du corps cylindrique 80, la lumière 22 délimitant une course en coulissement de cette fourrure 20 à l'intérieur du corps cylindrique 80 contre l'effet de rappel élastique d'un ressort 23 mis en place entre l'extrémité extérieure du corps cylindrique 80 et l'extrémité extérieure de la fourrure 20.

Pour favoriser la concentricité de l'embout mâle, on prévoit trois broches.

De préférence, la bague 16 comporte une périphérie lobée définissant entre chaque lobe 24 un passage 25 entre ladite bague 16 et la fourrure 20, le passage 25 étant en communication à l'arrière du corps cylindrique 80 avec un conduit 26 débouchant dans ledit corps cylindrique 80.

La fourrure 20 comporte des lumières 27 permettant la lisibilité du remplissage par l'opérateur.

De préférence, l'embout mâle 8 comporte des poignées 28 larges et robustes pour faciliter sa préhension et sa manipulation. En outre, lesdites poignées 28 protègent la façade de l'embout mâle 8, encore appelé embout ravitailleur ou accoupleur, de détériorations ou pollutions en cas de chute.

Lorsque l'embout mâle 8 est engagé sur l'embout femelle 1, un désalignement de l'ensemble est rattrapé par l'oscillation du mandrin 2 et de la bague 4 dans l'embout femelle 1, les portées en calotte sphérique 2a et 6 glissant contre les portées complémentaires 10a et 10c du corps cylindrique 10.

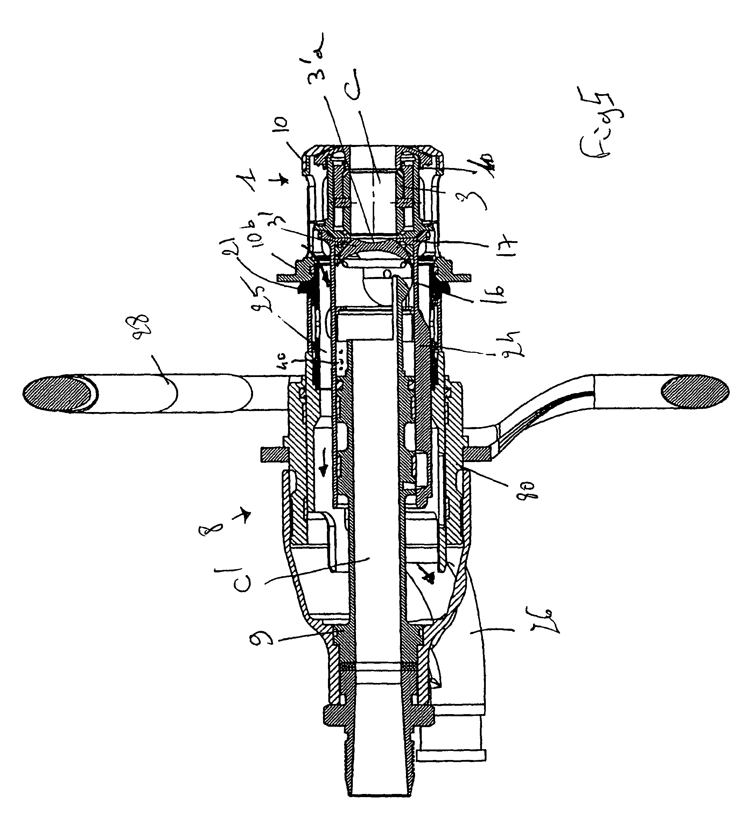

Lorsque l'interface a été réalisée, le siège d'appui et d'étanchéité 17 de l'embout mâle 8 vient en appui contre le siège d'appui et d'étanchéité 5 de l'embout femelle 1 et la bague 16 repousse la bague 4 à l'intérieur du corps cylindrique 10 de l'embout femelle 1. L'étanchéité à l'intérieur de l'embout femelle 1 est rompue et un passage est ouvert pour les gaz au travers de lumières 10d ménagées dans la paroi du corps cylindrique 10 de l'embout femelle 1. On commence donc le dégazage du réservoir, les gaz passant au travers desdites lumières 10d et ensuite dans les passages 25 définis par les lobes 24 de la bague cylindrique 16 de l'embout mâle 8 vers le conduit 26 débouchant dans l'embout mâle 8 de telle sorte qu'il peut y avoir une reprise des gaz (flèches dans la figure 5).

Le recul de la bague cylindrique 4 de l'embout femelle 1 permet également progressivement l'ouverture de son élément obturateur sphérique 3 (figure 5). Une fois parvenue à la pleine ouverture du réservoir, la fourrure 20 de l'embout mâle 8 a fini sa course en translation tandis que la bague cylindrique 16 de l'embout mâle 8 poursuit son recul dans le corps cylindrique 80, sous la poussée de l'opérateur, et va engendrer l'ouverture de l'élément obturateur sphérique 3' de l'embout mâle 8.

Les courses en translation de la bague 16 et de la fourrure 20 de l'embout mâle 8, de la bague 4 de l'embout femelle 1 par rapport à leur corps cylindrique respectif 80 et 10 et la force des moyens de rappel élastique 7, 23 et 81 déterminent la cinématique d'ouverture et de fermeture des éléments obturateurs sphériques 3 et 3' ainsi que celle du second circuit pour la reprise des gaz par exemple.

## Revendications

1. Embout femelle (1) pour raccord de conduit destiné à être embarqué sur une structure réceptrice tel qu'un conduit ou un réservoir, du type comportant un corps cylindrique (10) à l'intérieur duquel est logé concentrique un mandrin (2) définissant le canal fluidique (C) et portant à son extrémité extérieure, articulé en rotation, un élément obturateur sphérique (3) présentant un alésage diamétral (3a), une bague cylindrique (4), entourant ledit mandrin (2) et l'élément obturateur sphérique (3), étant logée entraînable en translation dans le corps cylindrique (10) contre l'effet d'un moyen de rappel élastique (7), les courses en translation de la bague (4) dans le corps (10, 80) provoquant l'entraînement en rotation de l'élément obturateur sphérique (3) entre sa position d'ouverture où son alésage (3a) est amené en coïncidence avec le canal fluidique (C) et sa position de fermeture,
**caractérisé en ce que** l'extrémité intérieure de mandrin (2) présente une portée (2a) en calotte sphérique en appui contre une portée complémentaire (10a) de l'extrémité intérieure du corps cylindrique (10) de l'embout femelle à l'image d'une rotule.

2. Embout femelle (1) selon la revendication 1,
**caractérisé en ce que** l'extrémité intérieure du corps (10) et l'extrémité intérieure du mandrin (2) sont traitées pour améliorer le glissement entre lesdites extrémités, à l'aide d'un traitement tel qu'une application d'un revêtement mince à base de fluor.

3. Embout femelle (1) selon l'une des revendications 1 et 2,
**caractérisé en ce qu'**au moins l'une des portées (10a, 2a) de l'extrémité intérieure du corps cylindrique (10) ou de l'extrémité intérieure du mandrin (2) de l'embout femelle (1) comporte au moins une portée de billes (B).

4. Embout femelle (1) selon l'une des revendications 1 et 2,
**caractérisé en ce que** la portée (10a) de l'extrémité intérieure du corps cylindrique (10) de l'embout femelle (1) comporte des puits (P) répartis régulièrement angulairement sur ladite portée en calotte sphérique (10a) et comportant chacun une bille (C), un puits (P) présentant une surface centrale bombée et une surface conique en périphérie.

5. Embout femelle (1) selon l'une des revendications 1 à 4,
**caractérisé en ce que** l'extrémité extérieure de la bague cylindrique (4) définit un siège d'étanchéité et d'appui (5) pour l'élément obturateur sphérique (3) et présente une portée périphérique (6) en calotte sphérique en appui contre une portée (10c) de forme complémentaire de l'extrémité extérieure du corps cylindrique (10).

6. Embout femelle (1) selon l'une des revendications 1 à 5,
**caractérisé en ce que** le corps cylindrique (10) de l'embout femelle (1) comporte des lumières (10d).

7. Embout femelle (1) selon l'une des revendications 1 à 6,
**caractérisé en ce que** le moyen de rappel élastique est un ressort (7) monté entre la bague (4) et le mandrin (2).

8. Embout femelle (1) selon l'une des revendications 1 à 7,
**caractérisé en ce que** l'élément obturateur sphérique (3) est usiné en fer à cheval et comporte en outre deux plats (13) diamétralement opposés pourvus respectivement d'un axe (14), une fourrure cylindrique (30) présentant des secteurs usinés en forme de fourches (31) étant logée concentrique à l'intérieur de la bague cylindrique (4), les axes (14) de l'élément obturateur sphérique (3) étant logés dans lesdites fourches (31), les doigts des fourches (31) s'encastrant dans des encoches (33) aménagées dans l'épaisseur du siège d'étanchéité et d'appui (5) sous l'effet d'un moyen de rappel élastique tel qu'une rondelle Belleville (32) ou similaire mis en place entre ladite fourrure cylindrique (30) et l'extrémité intérieure de la bague cylindrique (4).

9. Embout femelle selon l'une des revendications 1 à 8,
**caractérisé en ce qu'**un soufflet est mis en place entre la structure réceptrice de l'embout femelle (1) et le corps cylindrique (10) dudit embout femelle (1).

10. Raccord de conduit du type comportant un embout femelle (1) selon l'une des revendications 1 à 9 et un embout mâle comportant un corps cylindrique (80) à l'intérieur duquel est logé concentrique un mandrin (9) définissant le canal fluidique (C') et portant à son extrémité extérieure, articulé en rotation, un élément obturateur sphérique (3') présentant un alésage diamétral (3a'), une bague cylindrique (16), entourant ledit mandrin (9) et l'élément obturateur sphérique (3'), étant logée entraînable en translation dans le corps cylindrique (80) contre l'effet d'un moyen de rappel élastique (81), les courses en translation de la bague (16) dans le corps (80) provoquant, lors de l'engagement de l'embout mâle (8) sur l'embout femelle (1), l'entraînement en rotation de l'élément obturateur sphérique (3') entre sa position d'ouverture où son alésage (3a') est amené en coincidence avec le canal fluidique (C') et sa position de fermeture,
**caractérisé en ce que** le mandrin (9) de l'embout mâle (8) muni à son extrémité extérieure de l'élément obturateur sphérique (3') et entouré par la bague cylindrique (16) est monté en saillie du corps cylindrique (80) et l'embout mâle (8) comporte en outre une fourrure (20) engagée, entre la bague cylindrique (16) et le corps cylindrique (80), coulissante en translation dans ledit corps cylindrique (80), un moyen de rappel élastique (23) étant interposé entre le corps cylindrique (80) et la partie arrière de la face avant de ladite fourrure (20) qui assure l'engagement sur l'embout femelle (1) .

11. Raccord selon la revendication 10,
**caractérisé en ce que** la face avant d'engagement de la fourrure (20) est réalisée sous forme d'un cône du type trompette.

12. Raccord selon l'une des revendications 10 et 11,
**caractérisé en ce que** l'extrémité extérieure de la bague cylindrique (16) définit un siège d'étanchéité et d'appui (17) pour l'élément obturateur sphérique (3') de l'embout mâle (8).

13. Raccord selon l'une des revendications 10 à 12,
**caractérisé en ce qu'**il comporte un second circuit de circulation sensiblement concentrique au canal fluidique (C, C').

14. Raccord selon la revendication 13,
**caractérisé en ce que** la bague cylindrique (16) de l'embout mâle (8) présente au moins deux lobes périphériques définissant des passages (25) entre ladite bague (16) et la fourrure (20) et communiquant avec un conduit d'évacuation (26) débouchant dans le corps cylindrique (80) de l'embout mâle (8), passages (25) qui, lors de la connexion entre l'embout mâle (8) et l'embout femelle (1), sont mis en communication avec des lumières (10d) de l'embout femelle (1) .

15. Raccord selon l'une des revendications 13 et 14,
**caractérisé en ce que** l'élément obturateur (3') de l'embout mâle (8) est usiné en fer à cheval et comporte en outre deux plats (13) diamétralement opposés pourvus respectivement d'un axe (14), le mandrin (9) de l'embout mâle (8) présentant à son extrémité une fourrure cylindrique présentant des secteurs usinés en forme de fourches (15) dans lesquelles sont logés les axes (14) dudit élément obturateur sphérique (3') de manière à strictement contrôler le centrage dudit élément obturateur sphérique (3'), un moyen de rappel élastique (40) étant mis en place entre le mandrin (9) et la fourrure cylindrique.

## Patentansprüche

1. Rohrmuffe (1) für einen Rohrverbinder, der dafür vorgesehen ist, in einer Aufnahmestruktur, beispielsweise einer Rohrleitung oder einem Tank, eingesetzt zu werden, mit einem zylindrischen Körper (10), in dessen Innerem eine Hülse (2) konzentrisch eingesetzt ist, die den Fluidkanal (C) begrenzt und an ihrem äußeren Ende ein kugelförmiges Verschlusselement (3) trägt, welches drehbar angelenkt ist und eine diametrale Bohrung (3a) aufweist, wobei ein zylindrischer Ring (4), der die Hülse (2) und das kugelförmige Verschlusselement (3) umgibt, im zylindrischen Körper (10) gegen die Wirkung eines elastischen Rückstellmittels (7) verschiebbar eingesetzt ist, wobei die Verschiebewege des Rings (4) in dem Körper (10, 80) die Drehbewegung des kugelförmigen Verschlusselementes (3) zwischen dessen geöffneter Stellung, in der dessen Bohrung (3a) mit dem Fluidkanal (C) zusammenfällt, und dessen geschlossener Stellung bewirken, **dadurch gekennzeichnet, dass** das innere Ende der Hülse (2) eine Fläche als Kugelkappe aufweist, die sich gegen eine komplementäre Fläche (10a) des inneren Endes des zylindrischen Körpers (10) der Rohrmuffe im Sinne eines Kugelgelenkes abstützt.

2. Rohrmuffe (1) nach Anspruch 1, **dadurch gekennzeichnet, dass** das innere Ende des Körpers (10) und das innere Ende der Hülse (2) behandelt sind, um das Gleiten zwischen den Enden mit Hilfe einer Behandlung, beispielsweise einem Aufbringen einer dünnen Beschichtung auf der Basis von Fluor, zu verbessern.

3. Rohrmuffe (1) nach einem der Ansprüche 1 oder 2, **dadurch gekennzeichnet, dass** wenigstens eine der Flächen (10a, 2a) des inneren Endes des zylindrischen Körpers (10) oder des inneren Endes der Hülse (2) der Muffe (1) wenigstens eine kugeligeLagerfläche (B) umfasst.

4. Rohrmuffe (1) nach einem der Ansprüche 1 oder 2, **dadurch gekennzeichnet, dass** die Fläche (10a) des inneren Endes des zylindrischen Körpers (10) der Rohrmuffe (1) Ausnehmungen (F) umfasst, die gleichmäßig über den Umfang auf der Fläche (10a) mit Kugelkappe verteilt sind und jeweils eine Kugel (C) enthalten, wobei eine Ausnehmung(F) eine zentrale gewölbte Fläche und eine konische Fläche am Umfang aufweist.

5. Rohrmuffe (1) nach einem der Ansprüche 1 bis 4, **dadurch gekennzeichnet, dass** das äußere Ende des zylindrischen Rings (4) einen Sitz (5) zur Abdichtung und als Anschlag für das kugelförmige Verschlusselement (3) bildet und eine Umfangsfläche (6) mit Kugelkappe aufweist, die sich gegen eine Fläche (10c) komplementärer Forn des äußeren Endes des zylindrischen Körpers (10) abstützt.

6. Rohrmuffe (1) nach einem der Ansprüche 1 bis 5, **dadurch gekennzeichnet, dass** der zylindrische Körper (10) der Rohrmuffe (1) Langlöcher (10d) umfasst.

7. Rohrmuffe (1) nach einem der Ansprüche 1 bis 6, **dadurch gekennzeichnet, dass** das elastische Rückstellmittel eine Feder (7) ist, die zwischen dem Ring (4) und der Hülse (2) angeordnet ist.

8. Rohrmuffe (1) nach einem der Ansprüche 1 bis 7, **dadurch gekennzeichnet, dass** das kugelförmige Verschlusselement (3) in Form eines Hufeisens bearbeitet ist und außerdem zwei diametral gegenüberliegende Platten (13) umfasst, die jeweils mit einer Achse (14) versehen sind, wobei eine zylindrische Buchse (30), die Bogenstücke aufweist, welche in Form von Gabeln bearbeitet sind, konzentrisch im Inneren des zylindrischen Rings (4) eingesetzt ist, wobei die Achsen (14) des kugelförmigen Verschlusselementes (3) in die Gabeln (31) eingesetzt sind, wobei sich die Finger der Gabeln (31) in Vertiefungen (33), die in der Tiefe des Sitzes (5) zur Abdichtung und als Anschlag angebracht sind, unter der Wirkung eines elastischen Rückstellmittels, beispielsweise eines Belleville-Dichtungsrings (32) oder dergleichen, der zwischen der zylindrischen Buchse (30) und dem äußeren Ende des zylindrischen Rings (4) angeordnet ist, einfügen.

9. Rohrmuffe (1) nach einem der Ansprüche 1 bis 8, **dadurch gekennzeichnet, dass** ein Balg zwischen der Aufnahmestruktur der Rohrmuffe (1) und dem zylindrischen Körper (10) der Rohrmuffe (1) angeordnet ist.

10. Rohrverbinder, der eine Rohrmuffe (1) nach einem der Ansprüche 1 bis 9 und einen Rohrnippel umfasst, welcher einen zylindrischen Körper (80) umfasst, in dessen Innerem eine Hülse (9) konzentrisch eingesetzt ist, die den Fluidkanal (C') begrenzt und an ihrem äußeren Ende ein kugelförmiges Verschlusselement (3') trägt, welches drehbar angelenkt ist und eine diametrale Bohrung (3a') aufweist, wobei ein zylindrischer Ring (16), der die Hülse (9) und das kugelförmige Verschlusselement (3') umgibt, im zylindrischen Körper (80) gegen die Wirkung eines elastischen Rückstellmittels (8) verschiebbar eingesetzt ist, wobei die Verschiebewege des Rings (16) in dem Körper (80) beim Eingriff des Rohrnippels (8) in die Rohrmuffe (1) die Drehbewegung des kugelförmigen Verschlusselementes (3') zwischen dessen geöffneter Stellung, in der dessen Bohrung (3a') mit dem Fluidkanal (C') zusammenfällt, und dessen geschlossener Stellung bewirken, **dadurch gekennzeichnet, dass** die Hülse (9) des Rohrnippels (8), die an ihrem äußeren Ende mit dem kugelförmigen Verschlusselement (3') versehen und von dem zylindrischen Ring (16) umgeben ist, über den zylindrischen Körper (80) vorstehend angeordnet ist, und dass der Rohrnippel (8) außerdem eine Buchse (20) umfasst, die zwischen dem zylindrischen Ring (16) und dem zylindrischen Körper (80) translatorisch verschiebbar in den zylindrischen Körper (80) eingesetzt ist, wobei ein elastisches Rückstellmittel (23) zwischen dem zylindrischen Körper (80) und dem hinteren Teil der Vorderseite der Buchse (20) eingefügt ist, das den Eingriff an der Rohrmuffe (1) gewährleistet.

11. Verbinder nach Anspruch 10, **dadurch gekennzeichnet, dass** die Eingriffs-Vorderseite der Buchse (20) in der Form eines Kegels nach Art einer Trompete ausgeführt ist.

12. Verbinder nach einem der Ansprüche 10 bis 11, **dadurch gekennzeichnet, dass** das äußere Ende des zylindrischen Rings (16) einen Sitz (17) zur Abdichtung und als Anschlag für das kugelförmige Verschlusselement (3') des Rohrnippels (8) bildet.

13. Verbinder nach einem der Ansprüche 10 bis 12, **dadurch gekennzeichnet, dass** er einen zweiten Durchflusskreis umfasst, der im wesentlichen konzentrisch zu dem Fluidkanal (C, C') ist.

14. Verbinder nach Anspruch 13, **dadurch gekennzeichnet, dass** der zylindrische Ring (16) des Rohrnippels (8) wenigstens zwei halbkreisförmige Ausschnitte an seinem Umfang aufweist, welche Durchgänge (25) zwischen dem Ring (16) und der Buchse (20) bilden und mit einem Auslassrohr (26), das in den zylindrischen Körper (80) mündet, in Verbindung stehen, wobei die Durchgänge (25) bei der Verbindung des Rohrnippels (8) mit der Rohrmuffe (1) mit Langlöchern (10d) der Rohrmuffe (1) in Verbindung gebracht werden.

15. Verbinder nach einem der Ansprüche 13 oder 14, **dadurch gekennzeichnet, dass** das Verschlusselement (3') des Rohrnippels (8) in Form eines Hufeisens ausgelidet ist und außerdem zwei diametral gegenüberliegende Platten (13) umfasst, die jeweils mit einer Achse (14) versehen sind, wobei die Hülse (9) des Rohrnippels (8) an seinem Ende eine zylindrische Buchse aufweist, die Bogenstücke aufweist, welche in Form von Gabeln (15) bearbeitet sind, in welche die Achsen (14) des kugelförmigen Verschlusselementes (3') in der Weise eingesetzt sind, dass die Zentrierung des kugelförmigen Verschlusselementes (3') genau kontrolliert wird, wobei ein elastisches Rückstellmittel (40) zwischen der Hülse (9) und der zylindrischen Buchse angeordnet ist.

## Claims

1. Socket end (1), for pipe connection, intended to be installed on a receiving structure such as a pipe or a reservoir, of the type comprising a cylindrical body (10) inside which a core (2) is accommodated, said core (2) defining the fluid channel (C) and carrying at its outer end a rotationally articulated spherical plug element (3) having a diametral bore (3a), a cylindrical collar (4), surrounding the said core (2) and the spherical plug element (3), being accommodated in the cylindrical body (10) such that it can be driven in translational movement against the effect of elastic return movement means (7), the translational displacements of the collar (4) in the body (10, 80) giving rise-to rotational driving of the spherical plug element (3) between its open position, where its bore (3a) is brought into coincidence with the fluid channel (C), and its closed position,
**characterised in that** the inner end of the core (2) has a bearing surface (2a) in the form of a portion of a sphere bearing against a complementary bearing surface (10a) at the inner end of the cylindrical body (10) of the socket end in the manner of a ball and socket joint.

2. Socket end (1) according to Claim 1,
**characterised in that** the inner end of the body (10) and the inner end of the core (2) are treated to improve sliding between the said ends, with the aid of a treatment such as an application of a thin fluorine-based coating.

3. Socket end (1) according to one of Claims 1 and 2,
**characterised in that** at least one of the bearing surfaces (10a, 2a) at the inner end of the cylindrical body (10) or at the inner end of the core (2) of the socket end (1) has at least one bearing surface comprising balls (B).

4. Socket end (1) according to one of Claims 1 and 2,
**characterised in that** the bearing surface (10a) at the inner end of the cylindrical body (10) of the socket end (1) has wells (P) regularly distributed angularly on the said bearing surface in the form of a portion of a sphere (10a) and each containing a ball (C), a well (P) having a dished central surface and a conical surface at the periphery.

5. Socket end (1) according to one of Claims 1 to 4,
**characterised in that** the outer end of the cylindrical collar (4) defines a sealing and bearing seat (5) for the spherical plug element (3) and has a peripheral bearing surface (6) in the form of a portion of a sphere bearing against a bearing surface (10c) of complementary shape at the outer end of the cylindrical body (10).

6. Socket end (1) according to one of Claims 1 to 5,
**characterised in that** the cylindrical body (10) of the socket end (1) has apertures (10d).

7. Socket end (1) according to one of Claims 1 to 6,
**characterised in that** the elastic return movement means are a spring (7) fitted between the collar (4) and the core (2).

8. Socket end (1) according to one of Claims 1 to 7,
**characterised in that** the spherical plug element (3) is machined as a horseshoe and also has two diametrically opposed flat sides (13) respectively provided with a pin (14), a cylindrical liner (30) having machined sectors in the form of forks (31) being accommodated concentrically inside the cylindrical collar (4), the pins (14) of the spherical plug element (3) being accommodated in the said forks (31), the prongs of the forks (31) fitting into notches (33) made in the thickness of the sealing and bearing seat (5) under the influence of elastic return movement means, such as a Belleville washer (32) or the like fitted between the said cylindrical liner (30) and the inner end of the cylindrical collar (4).

9. Socket end according to one of Claims 1 to 8,
**characterised in that** a bellows is fitted between the receiving structure for the socket end (1) and the cylindrical body (10) of the said socket end (1).

10. Pipe connection of the type comprising a socket end (1) according to one of Claims 1 to 9 and a spigot end comprising a cylindrical body (80) inside which a core (9) is accommodated ) concentrically, said core (9) defining the fluid channel (C') and carrying, at its outer end, a rotationally articulated spherical plug element (3') having a diametral bore (3a'), a cylindrical collar (16), surrounding the said core (9) and the spherical plug element (3'), being accommodated in the cylindrical body (80) such that it can be driven in translational movement against the effect of elastic return movement means (81), the translational displacements of the collar (16) in the body (80) giving rise, during engagement of the spigot end (8) on the socket end (1), to rotational driving ) of the spherical plug element (3') between its open position, where its bore (3a') is brought into coincidence with the fluid channel (C'), and its closed position,
**characterised in that** the core (9) of the spigot end (8) provided at its outer end with the spherical plug element (3') and surrounded by the cylindrical collar (16) is fitted projecting from the cylindrical body (80) and the spigot end (8) also has an engaged liner (20), between the cylindrical collar (16) and the cylindrical body (80), sliding in translational movement in the said cylindrical body (80), ) elastic return movement means (23) being placed between the cylindrical body (80) and the rear part of the front face of the said liner (20) which ensures engagement on the socket end (1).

11. Connection according to Claim 10,
**characterised in that** the front engagement face of the liner (20) is made in the shape of a cone of the flared type.

12. Connection according to one of Claims 10 and 11,
**characterised in that** the outer end of the cylindrical collar (16) defines a sealing and bearing seat (17) for the spherical plug element (3') of the spigot end (8).

13. Connection according to one of Claims 10 to 12,
**characterised in that** it comprises a second circulation circuit essentially concentric with the fluid channel (C, C').

14. Connection according to Claim 13,
**characterised in that** the cylindrical collar (16) of the spigot end (8) has at least two peripheral lobes defining passages (25) between the said collar (16) and the liner (20) and communicating with a discharge pipe (26) opening into the cylindrical body (80) of the spigot end (8), which passages (25), during the connection between the spigot end (8) and the socket end (1), are brought into communication with the apertures (10d) of the socket end (1).

15. Connection according to one of Claims 13 and 14,
**characterised in that** the plug element (3') of the spigot end (8) is machined as a horseshoe and also has two diametrically opposed flat sides (13) provided respectively with a pin (14), the core (9) of the spigot end (8) having at its end a cylindrical liner having sectors machined in the form of forks (15) in which the pins (14) of the said spherical plug element (3') are accommodated so as strictly to control the centring of the said spherical plug element (3'), elastic return movement means (40) being fitted between the core (9) and the cylindrical liner.
